# EUROPEAN PATENT APPLICATION

(11) **EP 4 749 448 A1**
(43) Date of publication of application: **27.05.2026**
(21) Application number: 25213284.0
(22) Date of filing: 04.11.2025
(51) Int. Cl.: G06F 9/48

(54) **A PROGRAMMABLE COLLECTIVE OFFLOAD ENGINE FOR PERFORMING COMMUNICATION COLLECTIVES**

(30) Priority: 25.11.2024 US 202418959248
(71) Applicant: Microsoft Technology Licensing, LLC, Redmond, WA 98052 (US)
(72) Inventor: SANTOS FERREIRA ALVES, Daniel, Redmond, 98052 (US); PAPAMICHAEL, Michael Konstantinos, Redmond, 98052 (US); SIDLER, David Andreas, Redmond, 98052 (US); LAVROV, Alexey, Redmond, 98052 (US)
(74) Representative: CMS Cameron McKenna Nabarro Olswang LLP

(57) **Abstract**

The present disclosure generally relates to offloading the orchestration and control of a communication collective to a specialized collective offload engine. The systems, methods, and specialized computing hardware described herein avoid the latencies and other inefficiencies introduced when software applications control the execution of a communication collective. For example, the described systems, methods, and specialized computing hardware generate a binary representation of one or more direct acyclic graphs of node operations for a communication collective, and load this representation into the instruction memories of specialized collective offload engines residing on network endpoints connected to one or more network switches. During execution of the collective, the collective offload engines initiate node operations based on whether corresponding dependencies are met. By offloading these tasks to the collective offload engines, no additional latencies are introduced and other computing resources are kept free for use by other applications.

## Description

### BACKGROUND

Large-scale distributed workloads such as High-Performance Computing (HPC) and Artificial Intelligence (AI) generally utilize extensive communication among compute nodes. As such, performance of these complex systems regularly depends on the efficiency of those communications. Often, communication patterns (e.g., "collectives") happen in a synchronized manner across multiple participants in such distributed systems.

Often, HPC and AI systems rely on software libraries to implement collective operations. This is true even for systems that leverage compute offload (e.g., through accelerator hardware) and network interface card offload, such as Remote Direct Memory Access (RDMA) capability. Thus, although the underlying data transfer is offloaded as in RDMA, the orchestration, buffer management, completion, and dependency tracking are handled by software libraries such as MPI, NCCL, ROCCL, etc.

This reliance on software libraries can be problematic. For example, since communication collectives introduce a form of synchronization across all participating nodes, it is critical that for large scale systems collective execution time is deterministic. In software-controlled communication collectives, increased tail latencies at one or more multiple nodes can cause "straggler" effects, where a small number of participants might lag behind and delay remaining nodes. This-in turn-can increase the total execution time of the distributed compute task.

Existing systems have attempted to make collective execution more deterministic by leveraging compute accelerators. For example, some existing systems include a host that manages multiple accelerators. In that case, the host must execute collectives for multiple accelerates, thereby increasing jitter in the system due to multitasking and leading to increased tail execution time. In another example, some existing systems replace the host with a less performant CPU on the accelerator itself. In such a case, the less performant CPU could increase latency thereby becoming a bandwidth bottleneck depending on the collective being executed.

The subject matter in the background section is intended to provide an overview of the overall context for the subject matter disclosed herein. The subject matter discussed in the background section should not be assumed to be prior art merely as a result of its mention in the background section. Similarly, a problem mentioned in the background section or associated with the subject matter of the background section should not be assumed to have been previously recognized in the prior art.

### BRIEF DESCRIPTION OF THE DRAWINGS

FIG. 1 illustrates an example overview of a digital environment where a collective management system operates in connection with one or more collective offload engines to manage communication collectives in accordance with one or more embodiments.
FIG. 2 illustrates an example overview of direct acyclic graphs and a binary representation of the direct acyclic graphs in accordance with one or more embodiments.
FIG. 3 illustrates a box diagram of the features and functionality of the collective management system and a collective offload engine in accordance with one or more embodiments.
FIG. 4 illustrates a series of acts for offloading the control and processing of a communication collective to a special-purpose collective offload engine in accordance with one or more embodiments.
FIG. 5 illustrates certain components that may be included within a computer system in accordance with one or more embodiments.

### DETAILED DESCRIPTION

The present disclosure relates to systems, methods, and hardware devices for offloading the deterministic execution of communication collectives. As discussed above, existing systems rely on software libraries to orchestrate communication collectives (e.g., All-Reduce, All-Gather, Broadcast, Reduce-Scatter, Reduce, All-To-All, etc.). Such reliance on software, however, can increase latency and bandwidth bottlenecks in the controlling software and resources utilized by that software.

To solve these problems, the present disclosure describes a collective management system that leverages a specialized collective offload engine to provide deterministic execution of communication collectives with minimal latency. For example, and as will be discussed in greater detail below, the collective management system can generate a directed acyclic graph (DAG) representing execution of a communication collective by multiple participating network endpoints. In one or more embodiments, the collective management system loads the DAG into instruction memories of one or more collective offload engines correlated with network endpoints. During execution of the communication collective, a participating network endpoint communicates completion of operations to its correlated collective offload engine. The collective offload engine controls when subsequent operations begin by determining whether associated dependencies for those operations are met.

As such, the collective offload engines associated with a collection of network endpoints handle orchestration of the communication collective with specialized hardware rather than relying on software libraries. By leveraging the specialized collective offload engines to handle processing of a communication collective, the collective management system avoids the latencies and bottlenecks that accrue when software libraries perform the same tasks. This is especially true when the collective offload engines are physically located near the network interface card that interfaces with the one or more network endpoints that perform the operations of the communication collective.

In one or more implementations, the methods and steps performed by the collective management system reference multiple terms. For example, as referenced herein a "communication collective" refers to an exchange of data among communication endpoints. For example, in high-performance computing environments, tasks or operations are often distributed across communication endpoints or compute nodes to improve efficiency and performance. Thus, a communication collective can dictate how information is processed and moves among those compute nodes prior to, during, or following completion of those tasks. As discussed in greater detail below, some examples or communication collectives can include an All-Reduce communication collective, an All-Gather communication collective, a Broadcast communication collective, a Reduce-Scatter communication collective, a Reduce communication collective, and an All-To-All communication collective.

As used herein, a "direct acyclic graph" or "DAG" is a data representation including nodes and edges. In one or more embodiments, the nodes in a DAG map to operations performed by network endpoints or other physical compute nodes. Moreover, the edges between nodes in a DAG can represent dependencies between operations performed by those network endpoints or other physical compute nodes. Generally, a DAG is directed-meaning that each edge in the DAG moves from one node to another. Additionally, a DAG is acyclic such that there are no cycles among the nodes and edges. As will be discussed in greater detail below, the collective management system utilizes DAGs to represent the order of dependencies that must be met during execution of a communication collective across a series of network endpoints.

As used herein, an "engine" refers to a computing hardware engine that powers the operation of a computing device or system. For example, and as will be discussed in greater detail below, the collective offload engine is a specialized computing hardware engine that controls execution of operations by a network endpoint or compute node connected to a network controller (e.g., a NIC) during a communication collective.

As referenced herein, a "network switch" refers to a device that connects multiple devices within a network and manages the flow of data between them. As further referenced herein, a "physical compute node" refers to such a device that is connected to a network switch. In one or more embodiments, a network endpoint is one such physical compute node that connects within a network. In one or more embodiments, and as will be discussed in greater detail below, devices can connect to a network switch via uplinks and downlinks

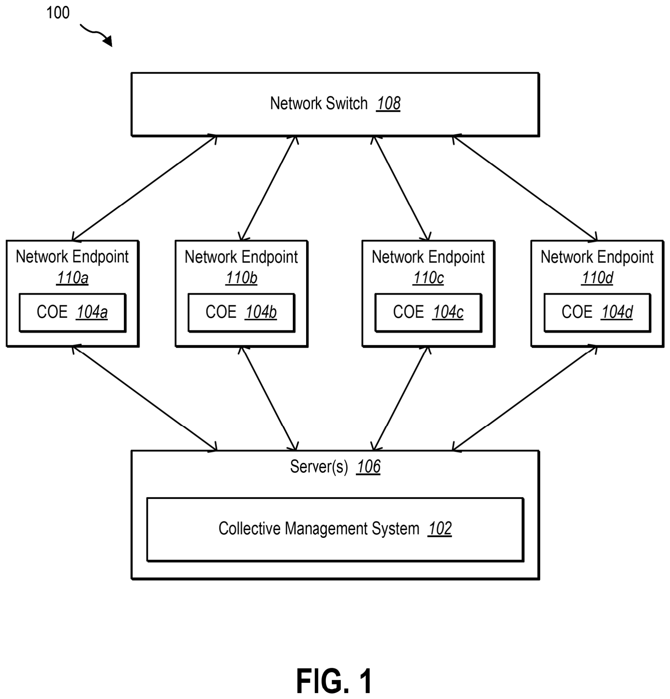

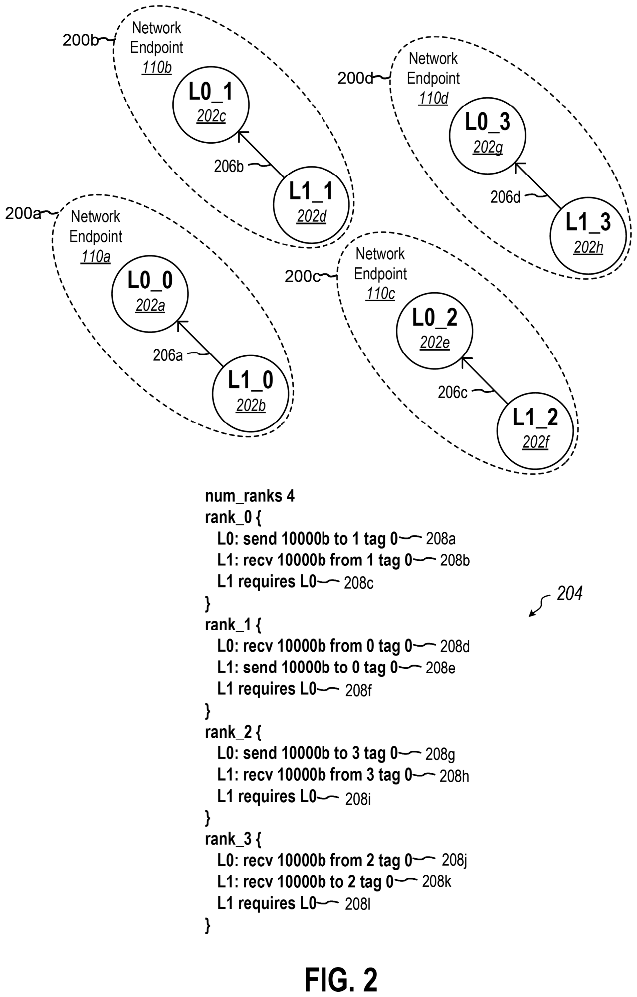

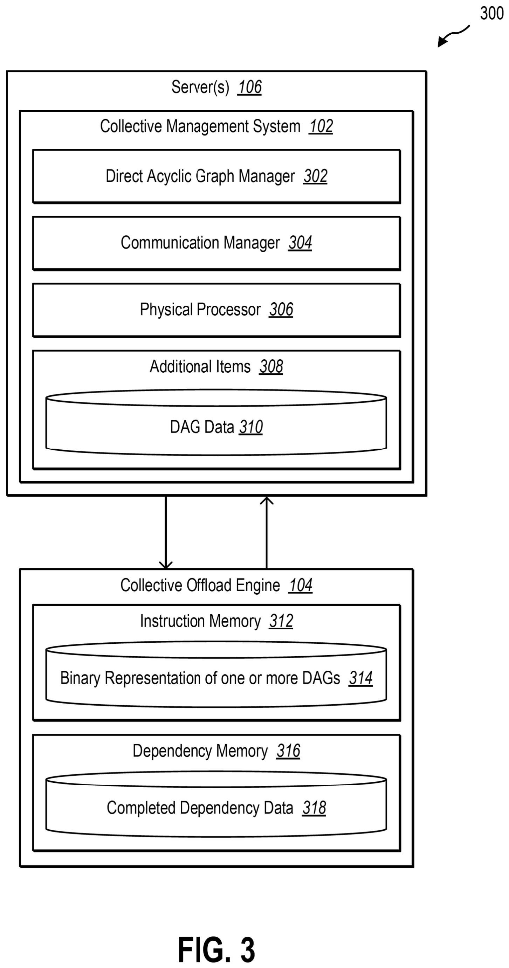

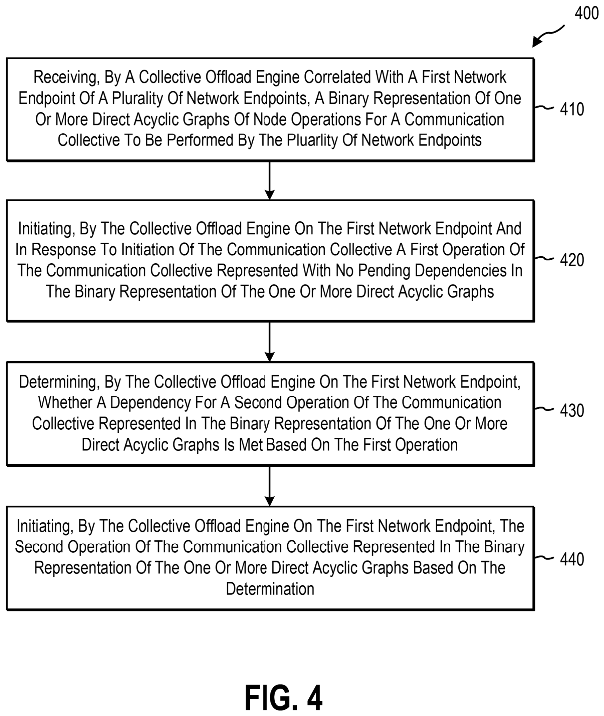

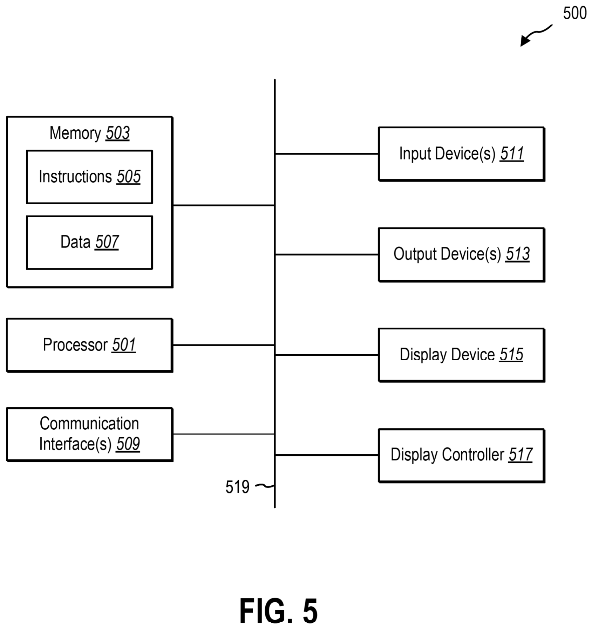

Additional details regarding example implementations of the collective management system will now be discussed in connection with the following figures. To illustrate, FIG. 1 provides an example overview of a networked environment where the collective management system operates to offload management of a communication collective to collective offload engines associated with network endpoints. FIG. 2 illustrates additional detail of binary representations of direct acyclic graphs of node operations for a communication collective. FIG. 3 illustrates a block diagram of the features and functionality of the collective management system working in connection with a collective offload engine. FIG. 4 illustrates a series of acts for offloading control of a communication collective operation. Finally, FIG. 5 illustrates an overview diagram of a computing system.

As just mentioned, FIG. 1 illustrates an example overview of a networked environment 100 including a collective management system 102 operating in connection with collective offload engines (COEs) 104a, 104b, 104c, and 104d. In one or more embodiments, as shown in FIG. 1, the COEs 104a-104d are correlated with network endpoints 110a, 110b, 110c, which are-in turn-operably connected to a network switch 108.

While FIG. 1 shows example arrangements, configures, and numbers of network endpoints and COEs in connection with the collective management system 102, other arrangements and configurations are possible. For example, in an alternate arrangement, the network switch 108 may be connected to any number of network endpoints. Additionally, in alternate arrangements, the collective management system 102 may operate in connection with any number of network switches. Regardless of the number of network endpoints and network switches, the COEs and collective management system 102 operate independently of the topology that connects the network endpoints (e.g., such as the network endpoints 110a-110d) to their associated network switches (e.g., such as the network switch 108).

In more detail, the network switch 108 is connected to the network endpoints 110a-110d by a series of links. For example, the network switch 108 can communicate and/or transmit data to each of the network endpoints 110a-110d via downlinks. Additionally, each of the network endpoints 110a-110d can communicate and/or transmit data to the network switch 108 via uplinks. As such, the network switch 108 is in a centralized position to communicate data among the network endpoints 110a-110d for the purpose of one or more collectives, or communication patterns that happen in a synchronized manner across the network endpoints 110a-110d.

As further shown in FIG. 1, the collective management system 102 can operate from a server(s) 106. In one or more embodiments, the collective management system 102 generates binary representations of direct acyclic graphs (DAGs) of node operations for a communication collective. The collective management system 102 can load the binary representations of the DAGs into instruction memories of the COEs 104a-104d. The COEs 104a-104d can then control the operation of the communication collective based on the binary representations of the DAGs. In doing so, the COEs 104a-104d free up the operation of the collective management system 102 and any other applications running on the server(s) 106 thereby reducing resource bottlenecking and other inefficiencies.

FIG. 2 illustrates additional detail with regard to direct acyclic graphs and binary representations of direct acyclic graphs. For example, as shown in FIG. 2, direct acyclic graphs (DAGs) 200a, 200b, 200c, and 200d can represent flows of communication and/or operations through a series of nodes. In one or more embodiments, each of the DAGs 200a-200d logically map to the network endpoints 110a-110d, respectively. Thus, the nodes within each of the DAGs 200a-200d represent operations performed by each of the network endpoints 110a-110d.

As shown, the DAG 200a includes nodes 202a and 202b, as well as edge 206a. The DAG 200b includes nodes 202c and 202d, as well as edge 206b. The DAG 200c includes nodes 202e and 202f, as well as edge 206c. The DAG 200d includes nodes 202g and 202h, as well as edge 206d. The DAGs 200a-200d are directed, meaning each of the edges 206a-206d in the DAGs 200a-200d has a direction going from one node to another. Additionally, the DAGs 200a-200d are acyclic, meaning that no cycles are represented. In other words, the DAGs 200a-200d include no paths that lead from one node back to itself.

In one or more embodiments, the DAGs 200a-200d represent dependencies among operations performed by the network endpoints 110a-110d during execution of a communication collective. For example, a communication collective may include instructions for each of the network endpoints 110a-110d to perform various operations on specific inputs, and then transmit the results of those operations to other compute nodes. As such, the communication collective can be logically represented as the DAGs 200a-200d.

In more detail, the nodes 202a-202f may perform operations including SEND, RECEIVE, and COMPUTE. To illustrate, a node performing a SEND may transfer a message of a given size to another node. A node performing a RECEIVE may accept an incoming message from another node. A node performing a COMPUTE may aggregate values (e.g., as required by an All-Reduce communication collective, a Reduce-Scatter communication collective, or a Reduce communication collective).

As mentioned above, the collective management system 102 can generate a binary representation of the DAGs 200a-200d. In one or more embodiments, the COEs 104a-104d are specialized hardware units including instruction memories that can be loaded with such a binary representation. Accordingly, the collective management system 102 can generate a binary representation 204 of the DAGs 200a-200d that includes the same information represented by the DAGs 200a-200d. For example, the binary representation 204 can include a series of binary instructions 208a, 208b, 208c, 208d, 208e, 208f, 208g, 208h, 208i, 208j, 208k, and 2081 across rank 1, rank 2, rank 3, and rank 4 that capture the same direct acyclic flow represented in the DAGs 200a-200d.

In more detail, "rank_0" within the binary representation 204 corresponds to the DAG 200a of operations performed by the network endpoint 110a. In one or more embodiments, the binary instruction 208a maps to the node 202a (e.g., "L0_0") and instructs the network endpoint 110a to send data (e.g., "10000b") to the network endpoint associated with "rank_1" (e.g., the network endpoint 110b). In one or more embodiments, the COE 104a may automatically begin the binary instruction 208a in response to determining that this is the first instruction in the communication collective, and as such, has no pending dependencies in the binary representation 204 of the DAGs 200a-200f.

Additionally, the binary instruction 208b maps to the node 202b (e.g., "L1_0") and instructs the network endpoint 110a to receive data (e.g., "10000b) from the network endpoint associated with "rank_1" (e.g., the network endpoint 110b). Finally, the binary instruction 208c is a dependency represented by the edge 206a and instructs the COE 104a on the network endpoint 110a to only perform the binary instruction 208b once the binary instruction 208a has been completed. In other words the binary instruction 208c tells the COE 104a to only allow the network endpoint 110a to receive data from the network endpoint 110b once it has sent data to the network endpoint 110b.

As further shown in FIG. 2, "rank_1" within the binary representation 204 corresponds to the DAG 200b of operations performed by the network endpoint 110b. In one or more embodiments, the binary instruction 208d maps to the node 202c (e.g., L0_1) and instructs the network endpoint 110b to receive data (e.g., "10000b") from the network endpoint associated with "rank_0" (e.g., the network endpoint 110a). Additionally, the binary instruction 208e maps to node 202d (e.g., "L1_1") and instructs the network endpoint 110b to send data (e.g., "10000b") to the network endpoint associated with "rank_0" (e.g., the network endpoint 110a). Finally, the binary instruction 208f is a dependency represented by the edge 206b and instructs the COE 104b on the network endpoint 110b to only perform the binary instruction 208e once the binary instruction 208d has been completed.

As further illustrated in FIG. 2, "rank_2" within the binary representation 204 corresponds to the DAG 200c of operations performed by the network endpoint 110c. In one or more embodiments, the binary instruction 208g maps to the node 202e (e.g., "L0_2") and instructs the network endpoint 110c to send data (e.g., "10000b") to the network endpoint associated with "rank_3" (e.g., the network endpoint 110d). Additionally, the binary instruction 208h maps to the node 202f (e.g., "L1_2") and instructs the network endpoint 110c to receive data (e.g., "10000b) from the network endpoint associated with "rank_3" (e.g., the network endpoint 110d). Finally, the binary instruction 208i is a dependency represented by the edge 206c and instructs the COE 104c on the network endpoint 110c to only perform the binary instruction 208h once the binary instruction 208g has been completed.

As further shown in FIG. 2, "rank_3" within the binary representation 204 corresponds to the DAG 200d of operations performed by the network endpoint 110d. In one or more embodiments, the binary instruction 208j maps to the node 202g (e.g., L0_3) and instructs the network endpoint 110d to receive data (e.g., "10000b") from the network endpoint associated with "rank_2" (e.g., the network endpoint 110c). Additionally, the binary instruction 208k maps to node 202h (e.g., "L1_3") and instructs the network endpoint 110d to send data (e.g., "10000b") to the network endpoint associated with "rank_2" (e.g., the network endpoint 110c). Finally, the binary instruction 2081 is a dependency represented by the edge 206d and instructs the COE 104d on the network endpoint 110d to only perform the binary instruction 208k once the binary instruction 208j has been completed.

While FIG. 2 illustrates each of the DAGs 200a-200d mapping to a single network endpoint, other arrangements may be possible in alternative embodiments. For example, an alternative embodiment may include multiple DAGs mapping to the same network endpoint. In that case, groups of operations may not have dependencies with each other.

FIG. 3 illustrates a block diagram 300 of the features and functionality of the collective management system 102 operating on the server(s) 106 in connection with the collective offload engine 104 (e.g., representing any of the COEs 104a-104d). As discussed above, the collective management system 102 offloads the control and management of a communication collective to the collective offload engine 104 by loading the collective offload engine 104 with the binary representation of the DAG for that communication collective (e.g., such as the binary representation 204 discussed above in connection with FIG. 2). As such, FIG. 3 provides additional detail with regard to the functionality of both the collective management system 102 and the collective offload engine 104 in connection with communication collectives. For example, as shown in FIG. 3, the collective management system 102 can include a direct acyclic graph manager 302 and a communication manager 304, along with a physical processor 306 and additional items 308 including DAG data 310. Additionally, as shown in FIG. 3, the collective offload engine 104 can include an instruction memory 312 loaded with a binary representation of at least one DAG 314 and a dependency memory 316 storing completed dependency data 318.

In certain implementations, the collective management system 102 may represent one or more software applications, modules, or programs that, when executed by a computing device, may cause the computing device to perform one or more tasks. For example, and as will be described in greater detail below, one or more of the direct acyclic graph manager 302 and the communication manager 304 may represent software stored and configured to run on one or more computing devices, such as the server(s) 106. Any of the direct acyclic graph manager 302 and/or the communication manager 304 shown in FIG. 3 may also represent all or portions of one or more special purpose computers to perform one or more operations.

As mentioned above, and as shown in FIG. 3, the collective management system 102 may include the direct acyclic graph manager 302. In one or more embodiments, the direct acyclic graph manager 302 handles tasks associated with generating binary representations of DAGs. For example, the direct acyclic graph manager 302 can include one or more interactive tools that enable a user to configure one or more DAGs, such as the DAGs 200a-200d illustrated in FIG. 2.

Once one or more DAGs have been configured or otherwise input, the direct acyclic graph manager 302 can generate a binary representation of the DAGs for use by the collective offload engines 104a-104d. For example, the direct acyclic graph manager 302 can analyze the nodes and edges of the DAG to determine dependencies and communication flow among the nodes. The direct acyclic graph manager 302 can then generate instructions (e.g., such as the binary instructions 208a-208l illustrated in FIG. 2) that instruct the one or more dependencies that must be satisfied before each represented network endpoint may begin a particular operation, as well as the one or more network endpoint that a single endpoint must transmit to upon completion. The direct acyclic graph manager 302 can generate the instructions including memory pointers or addresses for the network endpoints represented by within the one or more DAGs. The direct acyclic graph manager 302 can further generate the instructions including a memory pointer or address for the space holding the result of the node that has just finished operation.

In additional or alternative embodiments, the direct acyclic graph manager 302 may not be part of the collective management system 102. For example, in an alternative embodiment, the direct acyclic graph manager 302 may be a third-party component that generates DAGs and provides the generated DAGs to the collective management system 102. In that embodiment, the collective management system 102 may still load the generated DAGs, as described in greater detail below.

As mentioned above, and as shown in FIG. 3, the collective management system 102 includes the communication manager 304. In one or more embodiments, the communication manager 304 handles tasks associated with loading a binary representation of one or more DAGs into the instruction memory 312 of the collective offload engine 104. For example, the communication manager 304 can load or program a binary representation of one or more DAGs into the instruction memory 312 of the collective offload engine 104 by storing the binary representation of the one or more DAGs at a specific memory location associated with the collective offload engine 104 that is only available to the collective management system 102. In alternative embodiments, the instruction memory 312 may be an application-specific integrated circuit (ASIC). In those embodiments, the communication manager 304 may flash the binary representation of the one or more DAGs into the instruction memory 312 such that the ASIC can operate according to the binary representation of the one or more DAGs.

Additionally, the communication manager 304 can receive messages from the collective offload engine 104. For example, the communication manager 304 can receive an acknowledgement message from the collective offload engine 104 once a binary representation of one or more DAGs is successfully loaded into the instruction memory 312. Additionally, the communication manager 304 can receive a collective complete message from the collective offload engine 104 indicating that the processing of a communication collective has been completed by the network endpoints 110a-110d.

Additionally, as shown in FIG. 3, the server(s) 106 can include one or more physical processors 306. The one or more processor(s) 306 generally represent any type or form of hardware-implemented processing units capable of interpreting and/or executing computer-readable instructions. In one implementation, the one or more physical processors 306 may access and/or modify one or more components of the collective management system 102. Examples of the one or more physical processors 306 include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, and/or any other suitable physical processor.

Furthermore, as mentioned above, the server(s) 106 can include additional items 308 storing DAG data 310. In one or more embodiments, the DAG data 310 can include previously executed DAGs and/or binary representations of previously executed DAGs. In some embodiments, the DAG data 310 can include other metrics associated with the previously executed DAGs such as execution time, results (i.e., results of a REDUCE communication collective), or other performance data.

As mentioned above, and as shown in FIG. 3, the collective management system 102 offloads the operation of communication collectives to the collective offload engine 104. In one or more embodiments, the collective offload engine 104 (e.g., any of the COEs 104a-104d) is a specialized computer hardware component including caches, registers, logic gates, memories and so forth. In at least one embodiment, for example, the collective offload engine 104 can include the instruction memory 312 and the dependency memory 316. In one or more embodiments, the instruction memory 312 stores a binary representation of one or more DAGs 314.

With the binary representation of the one or more DAGs 314 is loaded or programmed into the instruction memory 312 by the communication manager 304, the collective offload engine 104 operates solely based on the binary representation of the one or more DAGs 314. For example, during execution of the communication collective represented by the binary representation of the one or more DAGs 314, the collective offload engine 104 checks dependency information from the binary representation of the one or more DAGs 314 and allows for the associated network endpoint to perform various operations only when corresponding dependencies are met.

As such, in one or more embodiments, the collective offload engine 104 stores completed dependency data 318 in the dependency memory 316 during execution of the communication collective. For example, the collective offload engine 104 stores each completed dependency such that the collective offload engine 104 can determine whether multiple dependencies of a particular operation are met. To illustrate, a particular operation represented in the binary representation of the one or more DAGs 314 may have two or more dependencies that must be met prior to beginning operation. As such, the collective offload engine 104 can store dependency information as other operations complete their operation to later determine that all of the two or more dependencies for the particular operation are met. In at least one embodiment, the collective offload engine 104 stores dependency information by reducing a count of pending dependencies for associated operations each time an operation completes. Thus, by the end of the communication collective, the completed dependency data 318 may include a series of zero counts.

In response to determining that all of the particular operation's dependencies are satisfied (e.g., all of the prior dependent operations have completed operation), the collective offload engine 104 can initiate the particular operation. Once the collective offload engine 104 has stored completed dependency information for all of the operations represented by the binary representation of the one or more DAGs 314 that are associated with the corresponding network endpoint, and determined that all operations have completed, the collective offload engine 104 can send a message to the collective management system 102 (e.g., via the communication manager 304) indicating that the communication collective operations associated with the corresponding network endpoint are complete.

As mentioned above, FIG. 4 illustrates an example series of acts 400 for offloading the control and processing of a communication collective to the special-purpose collective offload engine 104. While FIG. 4 illustrates acts according to one or more embodiments, alternative embodiments may omit, add to, reorder, and/or modify any of the acts shown in FIG. 4. The acts of FIG. 4 can be performed as part of a method. For example, the acts of FIG. 4 can be performed by the collective offload engine 104 after being loaded with a binary representation of one or more DAGs by the collective management system 102, as discussed above. In still further embodiments, a system including the collective offload engine 104 can perform the acts of FIG. 4.

As illustrated in FIG. 4, the series of acts 400 includes an act 410 of receiving, by a collective offload engine correlated with a first network endpoint of a plurality of network endpoints, a binary representation of one or more direct acyclic graphs of node operations for a communication collective to be performed by the plurality of network endpoints. For example, the series of acts 400 can include generating the binary representation of the one or more direct acyclic graphs of node operations for the communication collective by representing nodes within the direct acyclic graphs as operations in the binary representation of the one or more direct acyclic graphs and representing edges between the nodes within the one or more direct acyclic graphs as dependencies between the operations in the binary representation of the one or more direct acyclic graphs.

As illustrated in FIG. 4, the series of acts 400 includes an act 420 of initiating, by the collective offload engine on the first network endpoint and in response to initiation of the communication collective, a first operation of the communication collective represented with no pending dependencies in the binary representation of the one or more direct acyclic graphs. In some embodiments, the series of acts 400 includes determining that the first operation of the communication collective is completed based on receiving a completion acknowledgement from the first operation.

As illustrated in FIG. 4, the series of acts 400 includes an act 430 of determining, by the collective offload engine on the first network endpoint, whether a dependency for a second operation of the communication collective represented in the binary representation of the one or more direct acyclic graphs is met based on the first operation. For example, determining whether the dependency for the second operation of the communication collective represented in the binary representation of the one or more direct acyclic graphs is met based on the first operation can include comparing the completion acknowledgement from the first operation against at least one dependency for the second operation as indicated by the binary representation of the one or more direct acyclic graphs, and if the completion acknowledgement from the first operation satisfies all of the dependencies for the second operation, determining that the dependency for the second operation is met.

As illustrated in FIG. 4, the series of acts 400 includes an act 440 of initiating, by the collective offload engine on the first network endpoint, the second operation of the communication collective represented in the binary representation of the one or more direct acyclic graphs based on the determination. In some embodiments, the series of acts 400 further includes, upon completion of the first operation of the communication collective, reducing a count of pending dependencies associated with the second operation of the communication collective.

In one or more embodiments, the series of acts 400 further includes determining, by the collective offload engine, whether a first dependency for a third operation of the communication collective represented in the binary representation of the one or more direct acyclic graphs is met based on the first operation, determining, by the collective offload engine, whether a second dependency for the third operation of the communication collective represented in the binary representation of the one or more direct acyclic graphs is met based on the second operation, and initiating, by the collective offload engine, the third operation of the communication collective based on whether the first dependency for the third operation is met and the second dependency for the third operation is met.

In one or more embodiments, the communication collective comprises at least one of an All-Reduce communication collective, an All-Gather communication collective, a Reduce-Scatter communication collective, a Broadcast communication collective, a Reduce communication collective, or an All-To-All communication collective. Additionally, in some embodiments, the series of acts 400 further includes, upon initiating the second operation, storing data indicating the dependency for the second operation of the communication collective on the second node being met

In some embodiments, the acts represented in FIG. 4 may also be performed as part of a system. For example, a system may include a plurality of network endpoints connected to a network switch, a collective offload engine correlated with a network endpoint of the plurality of network endpoints, and a binary representation of one or more direct acyclic graphs of node operations for a communication collective loaded in an instruction memory of the collective offload engine, the binary representation of the one or more direct acyclic graphs being executable by the collective offload engine to: initiate, in response to initiation of the communication collective, a first operation of the communication collective represented with no pending dependencies in the binary representation of the one or more direct acyclic graphs, determine whether a dependency for a second operation of the communication collective represented in the binary representation of the one or more direct acyclic graphs is met based on the first operation, and initiate the second operation of the communication collective represented in the binary representation of the one or more direct acyclic graphs based on the determination.

Additionally, in some embodiments, the acts represented in FIG. 4 may also be performed by a collective offload engine (e.g., the collective offload engine 104). For example, a collective offload engine operably connected to a computing node of a plurality of computing nodes connected to a network switch and loaded with a binary representation of one or more direct acyclic graphs of node operations for a communication collective, the binary representation of the one or more direct acyclic graphs being executable by the collective offload engine to: initiate, in response to initiation of the communication collective, a first operation of the communication collective represented with no pending dependencies in the binary representation of the one or more direct acyclic graphs on the computing node of the plurality of computing nodes, determine whether a dependency for a second operation of the communication collective represented in the binary representation of the one or more direct acyclic graphs is met based on the first operation, and initiate the second operation of the communication collective represented in the binary representation of the one or more direct acyclic graphs based on the determination.

FIG. 5 illustrates certain components that may be included within a computer system 500. One or more computer systems 500 may be used to implement the various devices, components, and systems described herein.

The computer system 500 includes a processor 501. The processor 501 may be a general-purpose single- or multi-chip microprocessor (e.g., an Advanced RISC (Reduced Instruction Set Computer) Machine (ARM)), a special purpose microprocessor (e.g., a digital signal processor (DSP)), a microcontroller, a programmable gate array, etc. The processor 501 may be referred to as a central processing unit (CPU). Although just a single processor 501 is shown in the computer system 500 of FIG. 5, in an alternative configuration, a combination of processors (e.g., an ARM and DSP) could be used.

The computer system 500 also includes memory 503 in electronic communication with the processor 501. The memory 503 may be any electronic component capable of storing electronic information. For example, the memory 503 may be embodied as random-access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM), registers, and so forth, including combinations thereof.

Instructions 505 and data 507 may be stored in the memory 503. The instructions 505 may be executable by the processor 501 to implement some or all of the functionality disclosed herein. Executing the instructions 505 may involve the use of the data 507 that is stored in the memory 503. Any of the various examples of modules and components described herein may be implemented, partially or wholly, as instructions 505 stored in memory 503 and executed by the processor 501. Any of the various examples of data described herein may be among the data 507 that is stored in memory 503 and used during execution of the instructions 505 by the processor 501.

A computer system 500 may also include one or more communication interfaces 509 for communicating with other electronic devices. The communication interface(s) 509 may be based on wired communication technology, wireless communication technology, or both. Some examples of communication interfaces 509 include a Universal Serial Bus (USB), an Ethernet adapter, a wireless adapter that operates in accordance with an Institute of Electrical and Electronics Engineers (IEEE) 802.11 wireless communication protocol, a Bluetooth^{®} wireless communication adapter, and an infrared (IR) communication port.

A computer system 500 may also include one or more input devices 511 and one or more output devices 513. Some examples of input devices 511 include a keyboard, mouse, microphone, remote control device, button, joystick, trackball, touchpad, and lightpen. Some examples of output devices 513 include a speaker and a printer. One specific type of output device that is typically included in a computer system 500 is a display device 515. Display devices 515 used with embodiments disclosed herein may utilize any suitable image projection technology, such as liquid crystal display (LCD), light-emitting diode (LED), gas plasma, electroluminescence, or the like. A display controller 517 may also be provided, for converting data 507 stored in the memory 503 into text, graphics, and/or moving images (as appropriate) shown on the display device 515.

The various components of the computer system 500 may be coupled together by one or more buses, which may include a power bus, a control signal bus, a status signal bus, a data bus, etc. For the sake of clarity, the various buses are illustrated in FIG. 5 as a bus system 519.

The present disclosure generally relates to offloading the orchestration and control of a communication collective to a specialized collective offload engine. The systems, methods, and specialized computing hardware described herein avoid the latencies and other inefficiencies introduced when software applications control the execution of a communication collective. For example, the described systems, methods, and specialized computing hardware generate a binary representation of one or more direct acyclic graphs of node operations for a communication collective, and load this representation into the instruction memories of specialized collective offload engines residing on network endpoints connected to one or more network switches. During execution of the collective, the collective offload engines initiate node operations based on whether corresponding dependencies are met. By offloading these tasks to the collective offload engines, no additional latencies are introduced and other computing resources are kept free for use by other applications.

The present disclosure is supplemented by the following examples.

Example 1: A method for offloading control of communication collective operation comprising: receiving, by a collective offload engine correlated with a first network endpoint of a plurality of network endpoints, a binary representation of one or more direct acyclic graphs of node operations for a communication collective to be performed by the plurality of network endpoints; initiating, by the collective offload engine on the first network endpoint and in response to initiation of the communication collective, a first operation of the communication collective represented with no pending dependencies in the binary representation of the one or more direct acyclic graphs; determining, by the collective offload engine on the first network endpoint, whether a dependency for a second operation of the communication collective represented in the binary representation of the one or more direct acyclic graphs is met based on the first operation; and initiating, by the collective offload engine on the first network endpoint, the second operation of the communication collective represented in the binary representation of the one or more direct acyclic graphs based on the determination.

Example 2: The method of Example 1, further comprising generating the binary representation of the one or more direct acyclic graphs of node operations for the communication collective by representing nodes within the one or more direct acyclic graphs as operations in the binary representation of the one or more direct acyclic graphs and representing edges between the nodes within the one or more direct acyclic graphs as dependencies between the operations in the binary representation of the one or more direct acyclic graphs.

Example 3: The method of Example 1, further comprising, upon completion of the first operation of the communication collective, reducing a count of pending dependencies associated with the second operation of the communication collective.

Example 4: The method of Example 3, further comprising determining that the first operation of the communication collective is completed based on receiving a completion acknowledgement from the first operation.

Example 5: The method of Example 4, wherein determining whether the dependency for the second operation of the communication collective represented in the binary representation of the one or more direct acyclic graphs is met based on the first operation comprises: comparing the completion acknowledgement from the first operation against at least one dependency for the second operation as indicated by the binary representation of the one or more direct acyclic graphs; and if the completion acknowledgement from the first operation satisfies all of the dependencies for the second operation, determining that the dependency for the second operation is met.

Example 6: The method of Example 1, further comprising: determining, by the collective offload engine, whether a first dependency for a third operation of the communication collective represented in the binary representation of the one or more direct acyclic graphs is met based on the first operation; determining, by the collective offload engine, whether a second dependency for the third operation of the communication collective represented in the binary representation of the one or more direct acyclic graphs is met based on the second operation; and initiating, by the collective offload engine, the third operation of the communication collective based on whether the first dependency for the third operation is met and the second dependency for the third operation is met.

Example 7: The method of Example 1, wherein the communication collective comprises at least one of an All-Reduce communication collective, an All-Gather communication collective, a Reduce-Scatter communication collective, a Broadcast communication collective, a Reduce communication collective, or an All-To-All communication collective.

Example 8: The method of Example 1, further comprising, upon initiating the second operation, storing data indicating the dependency for the second operation of the communication collective being met.

Example 9: A system comprising: a plurality of network endpoints connected to a network switch; a collective offload engine correlated with a network endpoint of the plurality of network endpoints; and a binary representation of one or more direct acyclic graphs of node operations for a communication collective loaded in an instruction memory of the collective offload engine, the binary representation of the one or more direct acyclic graphs being executable by the collective offload engine to: initiate, in response to initiation of the communication collective, a first operation of the communication collective represented with no pending dependencies in the binary representation of the one or more direct acyclic graphs; determine whether a dependency for a second operation of the communication collective represented in the binary representation of the one or more direct acyclic graphs is met based on the first operation; and initiate the second operation of the communication collective represented in the binary representation of the one or more direct acyclic graphs based on the determination.

Example 10: The system of Example 9, wherein the system further comprises: at least one processor; memory in electronic communication with the at least one processor; and instructions stored in memory, the instructions being executable by the at least one processor to generate the binary representation of the one or more direct acyclic graphs of node operations for the communication collective by representing nodes within the one or more direct acyclic graphs as operations in the binary representation of the one or more direct acyclic graphs and representing edges between the nodes within the one or more direct acyclic graphs as dependencies between the operations in the binary representation of the one or more direct acyclic graphs.

Example 11. The system of Example 10, wherein the binary representation of the one or more direct acyclic graphs is further executable by the collective offload engine to, upon completion of the first operation of the communication collective, reduce a count of pending dependencies associated with the second operation of the communication collective.

Example 12: The system of Example 11, wherein the binary representation of the one or more direct acyclic graphs is further executable by the collective offload engine to receive a completion acknowledgement from the first operation.

Example 13: The system of Example 12, wherein the binary representation of the one or more direct acyclic graphs is further executable by the collective offload engine to determine whether the dependency for the second operation of the communication collective is met based on the first operation by: comparing the completion acknowledgement from the first operation against at least one dependency for the second operation as indicated by the binary representation of the one or more direct acyclic graphs; and if the completion acknowledgement from the first operation satisfies all of the dependencies for the second operation, determining that the dependency for the second operation is met.

Example 14: The system of Example 13, wherein the binary representation of the one or more direct acyclic graphs is further executable by the collective offload engine to: determine whether a first dependency for a third operation of the communication collective represented in the binary representation of the one or more direct acyclic graphs is met based on the first operation; determine whether a second dependency for the third operation of the communication collective represented in the binary representation of the one or more direct acyclic graphs is met based on the second operation; and initiating the third operation of the communication collective based on whether the first dependency for the third operation is met and the second dependency for the third operation is met.

Example 15: The system of Example 14, wherein the communication collective comprises at least one of an All-Reduce communication collective, an All-Gather communication collective, a Reduce-Scatter communication collective, a Broadcast communication collective, a Reduce communication collective, or an All-To-All communication collective.

Example 16: The system of Example 15, wherein the binary representation of the one or more direct acyclic graphs is further executable by the collective offload engine to, upon initiating the second operation, store data indicating the dependency for the second operation of the communication collective being met.

Example 17: A collective offload engine operably connected to a computing node of a plurality of computing nodes connected to a network switch and loaded with a binary representation of one or more direct acyclic graphs of node operations for a communication collective, the binary representation of the one or more direct acyclic graphs being executable by the collective offload engine to: initiate, in response to initiation of the communication collective, a first operation of the communication collective represented with no pending dependencies in the binary representation of the one or more direct acyclic graphs on the computing node of the plurality of computing nodes; determine whether a dependency for a second operation of the communication collective represented in the binary representation of the one or more direct acyclic graphs is met based on the first operation; and initiate the second operation of the communication collective represented in the binary representation of the one or more direct acyclic graphs based on the determination.

Example 18: The collective offload engine of Example 17, wherein the communication collective comprises at least one of an All-Reduce communication collective, an All-Gather communication collective, a Reduce-Scatter communication collective, a Broadcast communication collective, a Reduce communication collective, or an All-To-All communication collective.

Example 19: The collective offload engine of Example 17, wherein the binary representation of the one or more direct acyclic graphs is further executable by the collective offload engine to, upon initiating the second operation, store data indicating the dependency for the second operation of the communication collective being met.

Example 20: The collective offload engine of Example 17, wherein the binary representation of the one or more direct acyclic graphs is further executable by the collective offload engine to: determine whether a first dependency for a third operation of the communication collective represented in the binary representation of the one or more direct acyclic graphs is met based on the first operation; determine whether a second dependency for the third operation of the communication collective represented in the binary representation of the one or more direct acyclic graphs is met based on the second operation; and initiating the third operation of the communication collective based on whether the first dependency for the third operation is met and the second dependency for the third operation is met.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various embodiments.

The steps and/or actions of the methods described herein may be interchanged with one another without departing from the scope of the claims. In other words, unless a specific order of steps or actions is required for proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element or feature described in relation to an embodiment herein may be combinable with any element or feature of any other embodiment described herein, where compatible.

The present disclosure may be embodied in other specific forms. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A method for offloading control of communication collective operation comprising:
receiving, by a collective offload engine (104) correlated with a first network endpoint (110a) of a plurality of network endpoints (110a-110d), a binary representation (204) of one or more direct acyclic graphs (200a-200d) of node operations for a communication collective to be performed by the plurality of network endpoints (110a-110d);
initiating, by the collective offload engine (104) on the first network endpoint (110a) and in response to initiation of the communication collective, a first operation of the communication collective represented with no pending dependencies in the binary representation (204) of the one or more direct acyclic graphs (200a-200d);
determining, by the collective offload engine (104) on the first network endpoint (110a), whether a dependency for a second operation of the communication collective represented in the binary representation (204) of the one or more direct acyclic graphs (200a-200d) is met based on the first operation; and
initiating, by the collective offload engine (104) on the first network endpoint (110a), the second operation of the communication collective represented in the binary representation (204) of the one or more direct acyclic graphs (200a-200d) based on the determination.

2. The method as recited in claim 1, further comprising generating the binary representation of the one or more direct acyclic graphs of node operations for the communication collective by representing nodes within the one or more direct acyclic graphs as operations in the binary representation of the one or more direct acyclic graphs and representing edges between the nodes within the one or more direct acyclic graphs as dependencies between the operations in the binary representation of the one or more direct acyclic graphs.

3. The method as recited in claim 1 or claim 2, further comprising, upon completion of the first operation of the communication collective, reducing a count of pending dependencies associated with the second operation of the communication collective.

4. The method as recited in claim 3, further comprising determining that the first operation of the communication collective is completed based on receiving a completion acknowledgement from the first operation.

5. The method as recited in claim 4, wherein determining whether the dependency for the second operation of the communication collective represented in the binary representation of the one or more direct acyclic graphs is met based on the first operation comprises:
comparing the completion acknowledgement from the first operation against at least one dependency for the second operation as indicated by the binary representation of the one or more direct acyclic graphs; and
if the completion acknowledgement from the first operation satisfies all of the dependencies for the second operation, determining that the dependency for the second operation is met.

6. The method as recited in any preceding claim, further comprising:
determining, by the collective offload engine, whether a first dependency for a third operation of the communication collective represented in the binary representation of the one or more direct acyclic graphs is met based on the first operation;
determining, by the collective offload engine, whether a second dependency for the third operation of the communication collective represented in the binary representation of the one or more direct acyclic graphs is met based on the second operation; and
initiating, by the collective offload engine, the third operation of the communication collective based on whether the first dependency for the third operation is met and the second dependency for the third operation is met.

7. The method as recited in any preceding claim, wherein the communication collective comprises at least one of an All-Reduce communication collective, an All-Gather communication collective, a Reduce-Scatter communication collective, a Broadcast communication collective, a Reduce communication collective, or an All-To-All communication collective.

8. The method as recited in any preceding claim, further comprising, upon initiating the second operation, storing data indicating the dependency for the second operation of the communication collective being met.

9. A system comprising:
a plurality of network endpoints (110a-110d) connected to a network switch (108);
a collective offload engine (104a) correlated with a network endpoint (110a) of the plurality of network endpoints (110a-110d); and
a binary representation (204) of one or more direct acyclic graphs (200a-200d) of node operations for a communication collective loaded in an instruction memory (312) of the collective offload engine (104a), the binary representation (204) of the one or more direct acyclic graphs (200a-200d) being executable by the collective offload engine (104a) to:
initiate, in response to initiation of the communication collective, a first operation of the communication collective represented with no pending dependencies in the binary representation (204) of the one or more direct acyclic graphs (200a-200d);
determine whether a dependency for a second operation of the communication collective represented in the binary representation (204) of the one or more direct acyclic graphs (200a-200d) is met based on the first operation; and
initiate the second operation of the communication collective represented in the binary representation (204) of the one or more direct acyclic graphs (200a-200d) based on the determination.

10. The system as recited in claim 9, wherein the system further comprises:
at least one processor;
memory in electronic communication with the at least one processor; and
instructions stored in memory, the instructions being executable by the at least one processor to generate the binary representation of the one or more direct acyclic graphs of node operations for the communication collective by representing nodes within the one or more direct acyclic graphs as operations in the binary representation of the one or more direct acyclic graphs and representing edges between the nodes within the one or more direct acyclic graphs as dependencies between the operations in the binary representation of the one or more direct acyclic graphs.

11. The system as recited in claim 10, wherein the binary representation of the one or more direct acyclic graphs is further executable by the collective offload engine to, upon completion of the first operation of the communication collective, reduce a count of pending dependencies associated with the second operation of the communication collective.

12. The system as recited in claim 11, wherein the binary representation of the one or more direct acyclic graphs is further executable by the collective offload engine to receive a completion acknowledgement from the first operation.

13. The system as recited in claim 12, wherein the binary representation of the one or more direct acyclic graphs is further executable by the collective offload engine to determine whether the dependency for the second operation of the communication collective is met based on the first operation by:
comparing the completion acknowledgement from the first operation against at least one dependency for the second operation as indicated by the binary representation of the one or more direct acyclic graphs; and
if the completion acknowledgement from the first operation satisfies all of the dependencies for the second operation, determining that the dependency for the second operation is met.

14. A collective offload engine (104a) operably connected to a computing node (110a) of a plurality of computing nodes (110a-110d) connected to a network switch (108) and loaded with a binary representation (204) of one or more direct acyclic graphs (200a-200d) of node operations for a communication collective, the binary representation (204) of the one or more direct acyclic graphs (200a-200d) being executable by the collective offload engine (104a) to:
initiate, in response to initiation of the communication collective, a first operation of the communication collective represented with no pending dependencies in the binary representation (204) of the one or more direct acyclic graphs (200a-200d) on the computing node (110a) of the plurality of computing nodes (110a-110d);
determine whether a dependency for a second operation of the communication collective represented in the binary representation (204) of the one or more direct acyclic graphs (200a-200d) is met based on the first operation; and
initiate the second operation of the communication collective represented in the binary representation (204) of the one or more direct acyclic graphs (200a-200d) based on the determination.

15. The collective offload engine as recited in claim 14, wherein the binary representation of the one or more direct acyclic graphs is further executable by the collective offload engine to, upon initiating the second operation, store data indicating the dependency for the second operation of the communication collective being met.
